(19) Europäisches Patentamt
European Patent Office
Office européen des brevets

(11) **EP 4 712 168 A1**

(12) **EUROPEAN PATENT APPLICATION**
published in accordance with Art. 153(4) EPC

(43) Date of publication:
**18.03.2026 Bulletin 2026/12**

(21) Application number: **24825924.4**

(22) Date of filing: **19.06.2024**

(51) International Patent Classification (IPC):
*H01M 4/525* (2010.01)     *H01M 4/505* (2010.01)
*H01M 10/054* (2010.01)     *H01M 10/0562* (2010.01)

(52) Cooperative Patent Classification (CPC):
Y02E 60/10

(86) International application number:
**PCT/JP2024/022189**

(87) International publication number:
**WO 2024/262523 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.06.2023 JP 2023100933**

(71) Applicants:
• **JFE Steel Corporation**
**Tokyo, 100-0011 (JP)**
• **JFE Mineral & Alloy Company, Ltd.**
**Tokyo 105-0014 (JP)**

(72) Inventors:
• **USAMI Junya**
**Tokyo 100-0011 (JP)**
• **SUTO Mikito**
**Tokyo 100-0011 (JP)**
• **EDAMURA Kurei**
**Tokyo 100-0011 (JP)**
• **NAGANO Rintaro**
**Tokyo 105-0014 (JP)**
• **EMA Mika**
**Tokyo 105-0014 (JP)**
• **HAMANO Yoshiaki**
**Tokyo 105-0014 (JP)**

(74) Representative: **Haseltine Lake Kempner LLP**
**One Portwall Square**
**Portwall Lane**
**Bristol BS1 6BH (GB)**

(54) **POSITIVE ELECTRODE ACTIVE MATERIAL FOR SODIUM-ION SECONDARY BATTERY, METHOD FOR MANUFACTURING POSITIVE ELECTRODE ACTIVE MATERIAL FOR SODIUM-ION SECONDARY BATTERY, AND SODIUM-ION SECONDARY BATTERY**

(57)     An object of the present invention is to provide a positive electrode active material for a sodium ion secondary battery which has a large discharge capacity and a high average operating voltage in the sodium ion secondary battery to be obtained. The positive electrode active material for a sodium ion secondary battery according to the present invention is a positive electrode active material for a sodium ion secondary battery, the material including a composite oxide represented by particular Formula (1), a crystalline structure of the composite oxide belongs to a space group R-3m, and in a diffraction chart obtained by performing X-ray diffraction measurement, a ratio of a peak strength of 003 reflection of the composite oxide to a peak strength of 104 reflection of the composite oxide is not less than 1.00.

FIG. 1

**Description**

TECHNICAL FIELD

The present invention relates to a positive electrode active material for a sodium ion secondary battery and a method of producing the same.

The present invention also relates to a sodium ion secondary battery including a positive electrode including the positive electrode active material for a sodium ion secondary battery.

BACKGROUND ART

In recent years, the electrification of automobiles and the enhancement of the performance of electronic devices have been rapidly advanced, and a higher energy density is required for secondary batteries used as power sources for them. As the secondary batteries as described above, a lithium ion secondary battery is widely used in terms of having a high energy density, and further demand for a lithium ion secondary battery is expected to increase in the future.

In a lithium ion secondary battery, a lithium ion becomes a carrier of electric charge, and therefore lithium is essential. Lithium is a rare metal, and further, its production regions are unevenly distributed, so the wide use of lithium is not always desirable in terms of stable supply.

From the above point, as a secondary battery instead of a lithium ion secondary battery, a sodium ion secondary battery in which a sodium ion, instead of a lithium ion, serves as a carrier of electric charge has been studied.

A sodium ion secondary battery usually includes a positive electrode including a positive electrode active material, a negative electrode including a negative electrode active material, and an electrolyte interposed between the positive electrode and the negative electrode to conduct sodium ions therebetween, and various compounds have been studied as the positive electrode active material for a sodium ion secondary battery.

For example, Patent Document 1 proposes $Na_xMO_2$ (M is two or more elements selected from the group consisting of metal elements excluding alkali metal elements, and x is a value greater than 0 and not greater than 1) as a positive electrode active material for a sodium ion secondary battery.

CITATION LIST

PATENT LITERATURE

Patent Literature 1: JP 2010-080424 A

SUMMARY OF INVENTION

TECHNICAL PROBLEMS

In recent years, there has been a demand for achieving a higher energy density also in a sodium ion secondary battery. The present inventors studied the positive electrode active material described in Patent Document 1 and found that the energy density of the sodium ion secondary battery formed using the positive electrode active material does not satisfy the levels required in recent years and there is room for improvement. That is, the present inventors found that there is room for improvement in terms of discharge capacity and average operating voltage of the sodium ion secondary battery.

Therefore, an object of the present invention is to provide a positive electrode active material for a sodium ion secondary battery, which has a large discharge capacity and a high average operating voltage in the resulting sodium ion secondary battery.

Another object of the present invention is to provide a method of producing a positive electrode active material for a sodium ion secondary battery.

Further, yet another object of the present invention is to provide a sodium ion secondary battery using the positive active material for a sodium ion secondary battery.

SOLUTION TO PROBLEMS

The present inventors have made intensive studies to achieve the above objects and as a result, the invention has been completed. That is, the inventors found that the above-described objects can be attained by the constitution described later.

ADVANTAGEOUS EFFECTS OF INVENTION

The present invention can provide a positive electrode active material for a sodium ion secondary battery which has a large discharge capacity is large and a high average operating voltage in the sodium ion secondary battery to be obtained.

Another object of the present invention is to provide a method of producing a positive electrode active material for a sodium ion secondary battery.

Further, yet another object of the present invention is to provide a sodium ion secondary battery using the positive active material for a sodium ion secondary battery.

BRIEF DESCRIPTION OF DRAWINGS

[FIG. 1] FIG. 1 is a diffraction chart obtained by performing X-ray diffraction measurement each in Example 1 and Comparative Example 1.

[FIG. 2] FIG. 2 is a charge-discharge curve of a sodium ion secondary battery prepared each in Example 1 and Comparative Example 1.

DESCRIPTION OF EMBODIMENTS

Below, the present invention is described in detail.

The following description of the constituent elements may be made on the basis of representative embodiments of the present invention, but the present invention is not limited to such embodiments.

Below, the meanings of the respective descriptions in the present specification will be described.

Below, embodiments of the present invention will be described in detail. However, the embodiments described below are merely examples, and the present invention is not limited to the embodiments described below.

In the description, the numerical ranges indicated using "(from)... to..." include the former number as the lower limit value and the latter number as the upper limit value.

<Positive Electrode Active Material for Sodium Ion Secondary Battery>

The positive electrode active material for a sodium ion secondary battery of the present invention (hereinafter, also simply referred to as "positive electrode active material") is a positive electrode active material for a sodium ion secondary battery containing a composite oxide represented by Formula (1) described later.

The crystalline structure of the composite oxide represented by Formula (1) described below belongs to the space group R-3m.

Further, in the diffraction chart obtained by performing the X-ray diffraction measurement of the positive electrode active material of the present invention, the ratio of the peak intensity of 003 reflection of the composite oxide to the peak intensity of 104 reflection of the composite oxide is not less than 1.00.

It is presumed that when the composite oxide of the above-described composition has the above-described crystalline structure and the ratio of the peak intensities is not less than 1.00, the sodium ions in the composite oxide are smoothly released and easily inserted. As a result, when a sodium ion secondary battery is produced using the positive electrode active material containing the composite oxide, the discharge capacity is large, and the average operating voltage is high.

Below, each item is described.

[Composition]

The composite oxide contained in the positive electrode active material has a composition represented by the following Formula (1).

$$\text{Formula (1)} \qquad Na_aNi_bMn_cTi_dO_e$$

In Formula (1), a to e are positive real numbers, and b, c, and d satisfy the following relationships.

$$0.80 \leq b/c \leq 1.20$$

$$0 < d/(b + c + d)/\leq 0.30$$

$$b + c + d = 1.00$$

In Formula (1), Na, Ni, Mn, Ti and O represent sodium, nickel, manganese, titanium and oxygen, respectively.

In Formula (1), the values of a and e are not particularly limited.

In particular, a is preferably not less than 0.40, more preferably not less than 0.60 and even more preferably not less than 0.90. In addition, a is preferably not more than 1.30, more preferably not more than 1.20, and even more preferably not more than 1.10.

b is preferably not less than 0.35, and more preferably not less than 0.40. In addition, b is preferably not more than 0.55 and more preferably not more than 0.50.

c is preferably not less than 0.35, and more preferably not less than 0.40.

Therefore, d is preferably not less than 0.03, more preferably not less than 0.05, and even more preferably not less than 0.10. In addition, d is preferably not more than 0.30%, more preferably not more than 0.25%, and further preferably not more than 0.20%.

The b/c value is preferably not less than 0.85, more preferably not less than 0.90, and even more preferably not less than 0.95. In addition, the b/c value is preferably not more than 1.15, more preferably not more than 1.10, and further preferably not more than 1.05.

The d/(b + c + d) value is preferably not less than 0.03, more preferably not less than 0.05, and even more preferably not less than 0.10. In addition, the d/(b + c + d) value is preferably not more than 0.25 and more preferably not more than 0.20.

In the description, the compositional ratio of the composite oxide (the values of a to e described above) is determined by fusion-coupled plasma-emission spectroscopy (ICP-OES).

[Space Group and Lattice Constant]

The crystalline structure of the compound oxide included in the positive electrode active material of the present invention belongs to the space group R-3m. A space group being R-3m means that the structure belongs to a space group having one 3-fold rotary inversion axis and having one mirror plane. The space group belongs to the trigonal system and is No. 166.

In addition, the lattice constant in the c-axis direction of the composite oxide included in the positive electrode active material is preferably 1.605 to 1.630 nm. The lattice constant in the c-axis direction is obtained by X-ray diffraction measurement described later.

The lattice constant in the c-axis direction is more preferably not less than 1.606 nm and even more preferably not less than 1.607 nm. The lattice constant in the c-axis direction is more preferably not less than 1.628 nm and even more preferably not less than 1.626 nm.

In the composite oxide included in the positive electrode active material of the present invention, octahedral units are each formed by arranging six oxygen atoms with respect to any one of nickel element, manganese element, and titanium element, the octahedral units are connected by sharing their faces to form a structure of layers, and sodium element is inserted between the layers.

In the unit lattice of the composite oxide, three layers are included, in two layers of which sodium element is inserted. The normal direction of the layers is parallel to the c-axis direction, and the layers are stacked in the c-axis direction. Here, the distance from the center position of one of the layers to the center position of the next adjacent layer is 1/3 of the lattice constant in the c-axis direction.

[XRD]

The positive electrode active material of the present invention has a ratio of the peak intensity of 003 reflection of the composite oxide to the peak intensity of 104 reflection of the composite oxide is not less than 1.00 in the diffraction chart obtained by performing X-ray diffraction (XRD) measurement.

In the present specification, the method for XRD measurement is performed according to the method of the examples described later.

In the diffraction chart, analysis as to whether the composite oxide belongs to the space group and whether a diffraction line is of the crystal plane of the index is performed by a conventional method.

The diffraction line of 003 reflection of the composite oxide usually appears in the range of $2\theta$=15 to 20° in the diffraction chart obtained by performing the so-called $\theta/2\theta$ measurement. In addition, the diffraction line of 104 reflection of the composite oxide usually appears in a range of $2\theta$ = 40 to 50° in the diffraction chart obtained by performing so-called θ/2θ measurement. Note that "θ/2θ measurement" refers to a measurement method in which, when the X-ray is incident on the sample at θ°, scanning is performed on a surface including the X-ray incident direction while maintaining a positional relationship in which the detector of the diffracted X-ray is at 2θ° with respect to the X-ray incident direction. The θ/2θ measurement is performed by means of measurement methods which are customary in the field.

With the ratio between the peak intensities being not less than 1.00, it is presumed that the disturbance of the crystalline structure in the c-axis direction is relatively small, whereby the sodium ions are easily taken in and out of the composite oxide when the positive electrode active material is used in a sodium ion secondary battery.

The ratio between the peak intensities is preferably not less than 1.10, more preferably not less than 1.20, and even more preferably not less than 1.25. The ratio of the peak intensity is usually not more than 2.00.

[Powder of Positive Electrode Active Material]

The positive electrode active material of the present invention is usually in a powder form. In addition, as described above, the positive electrode active material of the present invention includes the above-described composite oxide.

A composite oxide content is preferably not less than 95 mass% and more preferably not less than 98 mass% with respect to the total mass of the positive electrode active material. The upper limit of the content is not particularly limited and may be 100% by mass with respect to the total mass of the positive electrode active material.

It is preferable that the particles constituting the powder of the positive electrode active material form secondary particles resulting from aggregation of the primary particles. The shape of the secondary particles is not particularly limited but is preferably substantially spherical.

The average particle size of the secondary particles is preferably not less than 2 μm, more preferably not less than 4 μm, and even more preferably not less than 8 μm. The average particle diameter of the secondary particles is preferably not more than 20 μm and more preferably not more than 15 μm.

In the present specification, the average particle size of the secondary particles is measured by a laser diffraction method using the mastersizer 3000 manufactured by Malvern Panalytical. At the time of measuring, the powder of the positive electrode active material is dispersed in water stirred at 1000 rpm, and ultrasonic treatment is performed.

The particle size distribution of the secondary particles may be monomodal or multimodal, but is preferably multimodal from the viewpoint of improving the filling property of the positive electrode active material and improving the energy density. For the multimodal particle size distribution, for example, a bimodal particle size distribution is preferred, and it is more preferable that a bimodal particle size distribution is exhibited and the preferred average particle size is exhibited.

<Method of Producing Positive Electrode Active Material for Sodium Ion Secondary Battery>

In the method of producing a positive electrode active material for a sodium ion secondary battery according to the present invention, a nickel source and a manganese source are introduced into a reaction vessel liquid maintaining a pH of 9 or more and 12 or less to produce a precipitate, the precipitate, the sodium source and the titanium source are mixed to obtain a mixture, and the mixture is heated at not lower than 400°C and not higher than 1200°C.

According to the above production method, the positive electrode active material of the present invention is easily obtained.

Below, each procedure will be described.

[Production of Precipitate]

First, a nickel source and a manganese source are introduced into a reaction vessel liquid having a pH of 9 or more and 12 or less to produce a precipitate.

Since nickel and manganese form a precipitate in the above-described pH, the above steps are carried out to coprecipitate nickel and manganese to obtain a precipitate. The precipitate obtained by co-precipitation is considered to have nickel and manganese uniformly dispersed at the atomic level, and to satisfy the above-described properties in the positive electrode active material to be obtained.

The "reaction vessel liquid" refers to a liquid in the reaction vessel. In addition, the "introduction into the reaction vessel liquid maintaining a pH of 9 or more and 12 or less" means that the pH of the reaction vessel liquid is maintained at 9 or more and 12 or less, and the nickel source and the manganese source are introduced into the reaction vessel liquid. As a method of keeping pH of the reaction vessel liquid at 9 or more and 12 or less, for example, the nickel source and the manganese source may be introduced into the reaction vessel liquid while an alkaline aqueous solution to be described later is added to the reaction vessel liquid.

Further, an ammonium source, which will be described later, may be introduced into the reaction vessel liquid together with the nickel source and the manganese source.

Examples of the nickel source include nickel salts such as nickel sulfate, nickel carbonate, nickel nitrate, nickel acetate and nickel chloride, and nickel sulfate is preferred.

Examples of the manganese source include manganese salts such as manganese sulfate, manganese carbonate, manganese nitrate, manganese acetate and manganese chloride, and manganese sulfate is preferred.

The nickel source and the manganese source may be a solution (e.g., an aqueous solution) containing each of the above-described nickel source and manganese source.

When a solution containing a nickel source and a solution containing a manganese source are used as the nickel source and the manganese source, respectively, it is preferable that the solution containing the nickel source and the solution containing the manganese source are mixed in advance to form a mixed liquid, and the mixed liquid is introduced into the reaction vessel liquid.

The ratio (Ni/Mn) of the nickel content of the nickel source to the manganese content of the manganese source can be appropriately adjusted so as to have a composition within the scope of Formula (1) above, and it is preferably 0.8 to 1.2 in molar ratio.

Examples of the ammonium source include ammonium salts such as ammonium sulfate, ammonium chloride, ammonium nitrate and ammonium carbonate, and ammonium sulfate is preferred.

A solution (e.g., an aqueous solution) containing the ammonium source may be used as the ammonium source. In addition, ammonia water may be used as the ammonium source.

By adding an ammonium source, nucleation when co-precipitation occurs can be suppressed, and particle growth of the generated nuclei can be promoted.

A molar ratio of a content of the ammonium ion of the ammonium source to a total of a nickel content of the nickel source and a manganese content of the manganese source (hereinafter, expressed as "$NH_4^+/(Ni + Mn)$" in some cases) is preferably more than 0 and not more than 1.

Examples of the alkaline aqueous solution include, but are not particularly limited to, an aqueous sodium hydroxide (NaOH) solution and an aqueous potassium hydroxide (KOH) solution, and an aqueous sodium hydroxide solution is preferable.

The introduction into the reaction vessel liquid is preferably carried out while stirring the reaction vessel liquid. Stirring of the reaction vessel liquid may be performed, for example, by stirring the reaction vessel liquid with a stirring blade.

The temperature of the reaction vessel liquid is preferably not lower than 30°C and not higher than 60°C and more preferably not lower than 35°C and not higher than 45°C.

The atmosphere in which the reaction vessel is placed, that is, the atmosphere in the upper part of the reaction vessel liquid may be air atmosphere or an inert atmosphere. Preferable examples of the inert gas used to have the inert atmosphere include nitrogen gas and argon gas.

In addition, the inert gas may be bubbled into the reaction vessel liquid to suppress oxidation of the precipitate.

Production of the above-mentioned precipitate may be carried out in a batch-type reaction vessel or in a continuous-type reaction vessel.

When the above procedure is carried out, a reaction vessel liquid in which a precipitate is dispersed is obtained.

[Mixing and Heating]

Next, the precipitate, the sodium source, and the titanium source are mixed to obtain a mixture, and the mixture is heated at 400°C or higher and 1200°C or lower.

Examples of the method for obtaining the mixture include a method in which the precipitate is separated from the reaction vessel liquid having the precipitate dispersed therein, and the separated precipitate, the sodium source, and the titanium source are mixed.

When the precipitate is separated from the reaction vessel liquid, a known method can be applied. Examples thereof include a method of collecting a precipitate by filtering the reaction vessel liquid, a method of separating the precipitate from the reaction vessel liquid by centrifugal force, and a method of settling the precipitate by allowing the reaction vessel liquid to stand and removing the supernatant of the reaction vessel liquid.

The precipitate obtained by separating the precipitate from the reaction vessel liquid may be subjected to a drying treatment. As the drying treatment, a known method can be employed. Examples of the drying method include air drying, hot air drying, and vacuum drying.

The separation of the precipitate and the drying treatment may be performed simultaneously, and, for example, spray drying may be employed as the above-described method.

Further, the precipitate may be washed before the drying treatment is performed. Examples of the washing method include a method of bringing the precipitate into contact with water, and more specifically, the precipitate may be placed in water to be dispersed, and the precipitate may be separated from the water by applying the separation method described above. As the water used in the above procedure, purified water such as ion-exchanged water is preferably used.

After washing the precipitate, the washed precipitate may be dried by applying the drying method described above.

The mixing method for obtaining a mixture by mixing the separated precipitate, the sodium source, and the titanium source is not particularly limited, but examples thereof include a method of mixing the powder with a stirring blade or the like, and a method of mixing with pulverization of the powder such as mortar grinding, ball mill, and jet mill.

The ratio of the titanium content of the titanium source to the total amount of the nickel content and the manganese content in the precipitate (hereinafter, also referred to as "Ti/ (Ni + Mn") can be appropriately adjusted so as to be within the scope of Formula (1) above. In particular, Ti/ (Ni + Mn) is preferably not less than 0.05 and not more than 0.30 in terms of molar ratio.

The ratio of the sodium content of the sodium compound to the total amount of the nickel content and the manganese content in the precipitate, and the titanium content of the titanium source (hereinafter, referred to as "Na / (Ni + Mn + Ti)") can be appropriately adjusted so as to have a composition in the scope of Formula (1) above.

In particular, Na / (Ni + Mn + Ti) is preferably not less than 0.60 and not more than 1.10, and more preferably not less than 0.80 and not more than 1.10 in terms of molar ratio.

Examples of the titanium source include titanium oxide, titanium chloride, titanium nitride, and titanium fluoride, and titanium oxide is preferable.

Examples of the sodium source include sodium carbonate and sodium oxide, and sodium carbonate is preferable.

Next, the obtained mixture is heated at 400°C or higher and 1200°C or lower. When the above heating is performed, the positive electrode active material of the present invention is obtained.

The heating temperature is preferably not lower than 600°C and not higher than 1200°C. The atmosphere in which heating is performed is not particularly limited, and examples thereof include an oxidizing atmosphere (e.g., air atmosphere) and a non-oxidizing atmosphere (e.g., a nitrogen atmosphere and an argon atmosphere).

The temperature profile at the time of performing the heat treatment can be appropriately adjusted.

For example, the heat treatment for keeping the mixture at a predetermined temperature for a predetermined time may be performed, or the heat treatment may be divided into two or more times and performed. When the heat treatment is divided into two or more processes and performed, the maximum temperature of the first heat treatment is preferably lower than the maximum temperature of the second heat treatment.

The heating time is not particularly limited, but for example, the holding time at the temperature is preferably 0.5 hours or more, more preferably 5 hours or more, and even more preferably 12 hours or more. On the other hand, the holding time is, for example, 72 hours or less, and may be 48 hours or less. When the heat treatment is divided into two or more processes and performed, it is also preferable that the total heating time is the above-described preferable heating time.

In the case where the heat treatment is divided into two or more processes and performed, it is also preferable that the atmosphere of the first heat treatment is a non-oxidizing atmosphere (for example, a nitrogen atmosphere, an argon atmosphere, and the like), and the atmosphere of the second heat treatment is an oxidizing atmosphere (for example, air atmosphere and the like).

In the above description, a method of separating mixing the precipitate from the reaction vessel liquid, followed by mixing has been described, but the order, timing, and method of mixing can be appropriately adjusted.

For example, a titanium source may be added to the reaction vessel liquid, and the precipitate and the titanium source may be separated from the reaction vessel liquid by the above-described method and mixed with the sodium source.

In addition, the precipitate may be separated by the above-described method, the precipitate may be washed by the above-described method, the titanium source may be added to a slurry containing the liquid (e.g., water) used for washing and the precipitate, and the precipitate and the titanium source may be separated from the slurry to which the titanium source is added, and the precipitate and the titanium source may be mixed with the sodium source. In addition, in the above procedure, a sodium source may be further added to the slurry to which the titanium source was added, and the solid content may be separated from the slurry to which the sodium source was added, thereby obtaining a mixture.

[Other Steps]

The method for producing a positive electrode active material for a sodium ion secondary battery of the present invention may include other steps than those described above.

For example, the positive electrode active material obtained by the above procedure may be cleaned. As the cleaning method, the above-described method can be applied. When the obtained positive electrode active material is washed, an unreacted raw material (for example, the sodium source) can be removed.

The positive electrode active material subjected to the cleaning may be further dried. As the method of drying, the above-described method can be applied.

Further, after drying, additional heating may be performed. The heating temperature is preferably not lower than 200°C and not higher than 800°C. The heating time can be appropriately adjusted, and is for example 0.5 to 12 hours.

<Sodium Ion Secondary Battery>

The sodium ion secondary battery of the present invention includes a positive electrode including the positive electrode active material of the present invention, a negative electrode, and an electrolyte interposed between the positive electrode and the negative electrode to conduct sodium ions. With respect to the other configurations of the sodium ion secondary battery of the present invention, a conventionally known configuration may be adopted.

For example, the sodium ion secondary battery of the present invention may further include a separator. In addition, the form of the sodium ion secondary battery of the present invention can be arbitrarily selected from a cylindrical type, a square type, a coin type, a sheet type, a laminate type, a button type and other types, depending on the intended use, the device to which the battery is to be mounted, the required charge-discharge capacity, or the like.

Below, each configuration of the sodium ion secondary battery of the present invention will be described.

[Positive Electrode]

The positive electrode of the sodium secondary battery of the present invention usually includes the positive electrode active material (or the positive electrode mixture containing the positive electrode active material) and a positive electrode current collector that carries the positive electrode active material (or the positive electrode mixture).

The positive electrode current collector may be a metal foil, or may be a metal porous body (for example, nonwoven fabric of metal fibers, a metal porous body sheet, and the like). As the metal porous body, a metal porous body having a three-dimensional network-like skeleton (in particular, a hollow skeleton) can also be used. The material of the positive electrode current collector is not particularly limited, but aluminum, an aluminum alloy, or the like is preferable from the viewpoint of stability at the positive electrode potential. The thickness of the metal foil as the positive electrode current collector is, for example, 10 to 50 $\mu$m, and the thickness of the metal porous body as the positive electrode current collector is, for example, 100 to 2000 $\mu$m.

The positive electrode mixture contains a positive electrode active material and other components.

For example, the positive electrode mixture may further include at least one of a conductive additive and a binder in addition to the positive electrode active material.

Examples of the conductive additive include, but are not limited to, carbon black, acetylene black, graphite, carbon fibers (such as vapor-phase carbon fibers), and carbon nanotubes. One kind of the conductive additive may be used alone, or two or more kinds thereof may be used simultaneously.

In addition, from the viewpoint of enhancing conductivity, the conductive additive may be disposed so as to coat the surfaces of the positive electrode active material particles. The coating of the positive electrode active material particles with the conductive additive may be performed by bringing the conductive additive into contact with the positive electrode active material particles and attaching the conductive additive to the surfaces of the positive electrode active material particles, for example, by mechanochemical treatment (including mechanofusion treatment). The amount of the conductive additive in the positive electrode mixture is preferably 1 to 25 parts by mass with respect to 100 parts by mass of the positive electrode active material, for example.

Examples of the binder include, but are not limited to, fluororesins such as polyvinylidene fluoride and polytetrafluoroethylene; polyolefin resins; rubbery polymers such as styrene butadiene rubber; polyamide resins (such as aromatic polyamides); polyimide resins such as polyimide and polyamideimide; polyvinylpyrrolidone; polyvinyl alcohol; and cellulose ethers (carboxyalkyl cellulose and its salt such as carboxymethyl cellulose and its sodium salt). One kind of binder may be used alone, or two or more kinds of binder may be used at the same time.

The amount of the binder in the positive electrode mixture is not particularly limited, but is preferably, for example, 0.5 to 15 parts by mass with respect to 100 parts by mass of the positive electrode active material from the viewpoint of easily increasing the discharge capacity while exhibiting high binding properties.

The positive electrode can be formed by, for example, coating or filling a positive electrode current collector with a positive electrode mixture, drying the positive electrode mixture, and compressing (or rolling) the positive electrode mixture in the thickness direction as necessary. The positive electrode mixture is usually used in the form of a slurry (or paste) containing a dispersion medium. As the dispersing medium, for example, organic solvents such as N-methyl-2-pyrrolidone (NMP:N-methyl-2-pyrrolidone) or water is used. As the dispersion medium, two or more kinds of solvents may be mixed and used.

[Negative Electrode]

The negative electrode of the sodium secondary battery of the present invention usually includes a negative electrode active material (or a negative electrode mixture containing a negative electrode active material) and a negative electrode current collector that carries a negative electrode active material (or a negative electrode mixture).

The negative electrode current collector may be a metal foil, or may be a metal porous body (for example, nonwoven fabric of metal fibers, a metal porous body sheet, and the like). As the metal porous body, a metal porous body having a three-dimensional network-like skeleton (in particular, a hollow skeleton) can also be used. The material of the negative electrode current collector is not particularly limited, and examples thereof include copper, nickel, aluminum, an aluminum alloy, and stainless steel, and aluminum is preferable. The thickness of the metal foil as the negative electrode current collector is, for example, 10 to 50 $\mu$m, and the thickness of the metal porous body as the negative electrode current collector is, for example, 100 to 2000 $\mu$m.

As the negative electrode active material of the sodium secondary battery of the present invention, for example, a sodium metal and a sodium alloy, a material capable of doping and dedoping sodium ions, and the like can be used.

Examples of the material capable of doping and dedoping sodium ions include carbonaceous materials, oxides capable of doping and dedoping sodium ions at a lower potential than the positive electrode, chalcogen compounds such as sulfides, and borates.

Examples of the carbonaceous material include easily-graphitizable carbon (soft carbon) and non-graphitizable carbon (hard carbon), and hard carbon is preferable.

The negative electrode may contain a thermoplastic resin as a binder as necessary. That is, the negative electrode mixture may contain a thermoplastic resin as a binder.

Examples of the thermoplastic resin include polyvinylidene fluoride, polyethylene, and polypropylene.

Examples of the negative electrode include a method in which the negative electrode current collector and the negative electrode active material or the negative electrode mixture are pressure-molded, and a method in which the mixture is pasted using the above-described dispersion medium or the like, the paste is applied to the negative electrode current collector and dried, and pressed and fixed.

[Electrolyte]

The electrolyte is interposed between the positive electrode and the negative electrode and conducts sodium ions.

The electrolyte may be a non-aqueous electrolyte or a solid electrolyte.

(Non-aqueous Electrolyte)

The non-aqueous electrolyte usually includes a solvent other than water and a solute capable of conducting sodium ions.

Examples of the solvent to be used in non-aqueous electrolyte solution include carbonates such as propylene carbonate, ethylene carbonate, vinylene carbonate, dimethyl carbonate, diethyl carbonate, ethyl methyl carbonate, 4-trifluoromethyl-1,3-dioxolane-2-one, and 1,2-di(methoxycarbonyloxy)ethane; ethers such as 1,2-dimethoxyethane, 1,3-dimethoxypropane, pentafluoropropylmethyl ether, 2,2,3,3-tetrafluoropropyldifluoromethyl ether, tetrahydrofuran, and 2-methyltetrahydrofuran; esters such as methyl formate, methyl acetate, and $\gamma$-butyrolactone; nitriles such as acetonitrile and butyronitrile; amides such as N,N-dimethylformamide and N,N-dimethylacetamide; carbamates such as 3-methyl-2-oxazolidone; sulfolanes, sulfur-containing compounds such as dimethyl sulfoxide, 1,3-propane sultone, ethylene sulphite, propylene sulphite, dimethyl sulphite, and diethyl sulphite; and those in which a fluorine substituent is further introduced into the above-mentioned solvent can be used. Usually, two or more of the above solvents are mixed and used.

Among them, a mixed solvent containing carbonates is preferable, a mixed solvent containing a cyclic carbonate and an acyclic carbonate is preferable, and a mixed solvent containing a cyclic carbonate and an ether is more preferable. Here, the mixed solvent containing a cyclic carbonate and an acyclic carbonate is preferably a mixed solvent containing ethylene carbonate, dimethyl carbonate and ethyl methyl carbonate in view of a wide operating temperature range and excellent load characteristics.

The solute capable of conducting sodium ions is preferably a sodium salt.

The type of the anion (first anion) constituting the sodium salt is not particularly limited, and examples thereof include an anion of a fluorine-containing acid (such as a fluorine-containing phosphate anion such as hexafluorophosphate ion; a fluorine-containing borate anion such as tetrafluoroborate ion), an anion of a chlorine-containing acid (such as a perchlorate ion), an oxalate borate ion such as an anion of an oxyacid having an oxalate group (a bis(oxalato)borate ion (such as $B(C_2O_4)_2^-$)), an oxalato phosphate ion such as tris(oxalato)phosphate ion ($P(C_2O_4)_3^-$)), an anion of a fluoroalkanesulfonic acid (such as trifluoromethanesulfonate ion ($CF_3SO_3^-$)), and a bissulfonylamide anion.

Examples of the above bissulfonylamide anion include bis(fluorosulfonyl)amide anion (FSA:bis(fluorosulfonyl) amide anion), bis(trifluoromethylsulfonyl)amide anion (TFSA:bis(trifluoromethylsulfonyl)amide anion), (fluorosulfonyl) (perfluoroalkylsulfonyl)amide anion ($(FSO_2)(CF_3SO_2)N^-$ and the like), and bis(perfluoroalkylsulfonyl)amide anion ($N(SO_2CF_3)_2^-$, $N(SO_2C_2F_5)_2^-$ and the like). Of these, at least one of FSA and TFSA is particularly preferable.

As the sodium salt, one kind may be used alone, or two or more kinds of sodium salts having different types of the first anion may be used in combination.

Specific examples of the solute of the non-aqueous electrolyte solution include $NaClO_4$, $NaPF_6$, $NaBF_4$, $NaCF_3SO_3$, $NaN(CF_3SO_2)_2$, $NaN(C_2F_5SO_2)_2$, and $NaC(CF_3SO_2)_3$).

The mixing ratio of the solvent and the solute is not particularly limited, and is appropriately set according to the purpose.

(Solid Electrolyte)

A solid electrolyte refers to a solid electrolyte through which sodium ions can conduct.

Examples of the solid electrolyte include sulfide-based and oxide-based materials.

Examples of the sulfide-based solid electrolyte include $Na_3PS_4$, $Na_3PS_4$-$Na_4SiS_4$, $Na_2S$-$P_2S_5$, $Na_2S$-$SiS_2$, and $Na_2S$-$GeS_2$.

Examples of the oxide-based solid electrolyte include $\beta$-alumina, $\beta$"-alumina, and an oxide material containing a Na Super Ionic Conductor (NASICON) type crystal. The NASICON type crystal is generally represented by the compositional formula of $Na_{1+x}Zr_2SixP_{3-x}O_{12}$, and x is greater than 0 and less than 3. At least one of Zr and Si in the above compositional formula may be partially substituted with another element.

[Separator]

The sodium ion secondary battery of the invention may include a separator.

A separator is disposed between the positive and negative electrodes to prevent contact between them and can allow sodium ions to pass through the separator.

The material of the separator is not particularly limited, and use is made of, for example, woven fabric, non-woven fabric, and a fine porous film made of synthetic resin. As a fine porous film made of synthetic resin, a polyolefin-based fine porous film is preferred in terms of the thickness, film strength, and film resistance. Examples of the polyolefin-based fine porous film include a polyethylene fine porous film, a polypropylene fine porous film, and a fine porous film formed by combining those. Glass fiber separators are also preferable because they are effective in preventing micro-shorts.

[EXAMPLES]

The present invention is described in further detail based on the examples below.

The materials, use amounts, ratios, treatment details, treatment procedures and the like described in the example below may be modified as appropriate as long as they do not depart from the scope and spirit of the present invention. Therefore, the scope of the present invention should not be construed as being limited to the following examples.

<Example 1>

The positive electrode active material 1 was produced by the following procedure, the positive electrode active material 1 was evaluated, a sodium ion secondary battery was produced using the positive electrode active material 1, and the charge and discharge characteristics of the sodium ion secondary battery were evaluated.

[Production of Precipitate]

Into a reaction vessel, 5L of pure water and an aqueous sodium hydroxide solution were added and mixed to obtain a reaction vessel liquid with pH being adjusted to 11.

A mixed aqueous solution of 3.0 mol/L of an aqueous nickel-sulfate solution and 3.0 mol/L of an aqueous manganese-sulfate solution was charged into the reaction vessel liquid at the rate of 200 mL/h. At the same time, 3.0 mol/L of an aqueous ammonium sulfate solution was charged at the rate of 100 mL/h.

During the charging of the aqueous solutions, the aqueous sodium hydroxide solution was charged into the reaction vessel liquid so that pH of the reaction vessel liquid was maintained at 11.

The temperature of the reaction vessel liquid was controlled to 40°C while the reaction vessel liquid was stirred at 600 rpm by a stirrer in air atmosphere.

A precipitate was produced by the above procedure.

[Separation and Drying]

The precipitate obtained by the above procedure was filtered out, and the filtered precipitate was washed with water and dried.

[Mixing and Heating]

120 g of the dried precipitate dried in the above procedure, 12 g of titanium oxide, and 80 g of sodium carbonate were mixed in a ball mill through rotation at 280 rpm for 4 hours to obtain a mixture.

The mixture obtained by the above-described mixing was subjected to two heat treatments to obtain a fired product.

More specifically, after heating at 650°C for 24 hours in a nitrogen atmosphere, heating was performed at 950°C for 15 hours in air atmosphere. The obtained fired product was crushed using a mortar and a pestle to obtain a positive electrode active material 1 as a composite oxide. The molar ratio of sodium, nickel, manganese, and titanium in the obtained positive electrode active material 1 (composite oxide) was determined by fusion-bond plasma emission spectroscopy. Accordingly, a to d in the above Formula (1) resulted in: a:b:c:d = 1:0.45:0.45:0.1.

That is, the positive electrode active material 1 was a composite oxide having a composition represented by the formula $Na_1Ni_{0.45}Mn_{0.45}Ti_{0.1}O_e$ (e is a positive real number), where b/c = 1.00, d/(b+c+d) = 0.10 and b+c+d = 1.00 were established.

The average particle diameter of the secondary particles of the positive electrode active material 1 was 9.3 μm.

[XRD]

The positive electrode active material 1 was measured by XRD to obtain a diffraction chart.

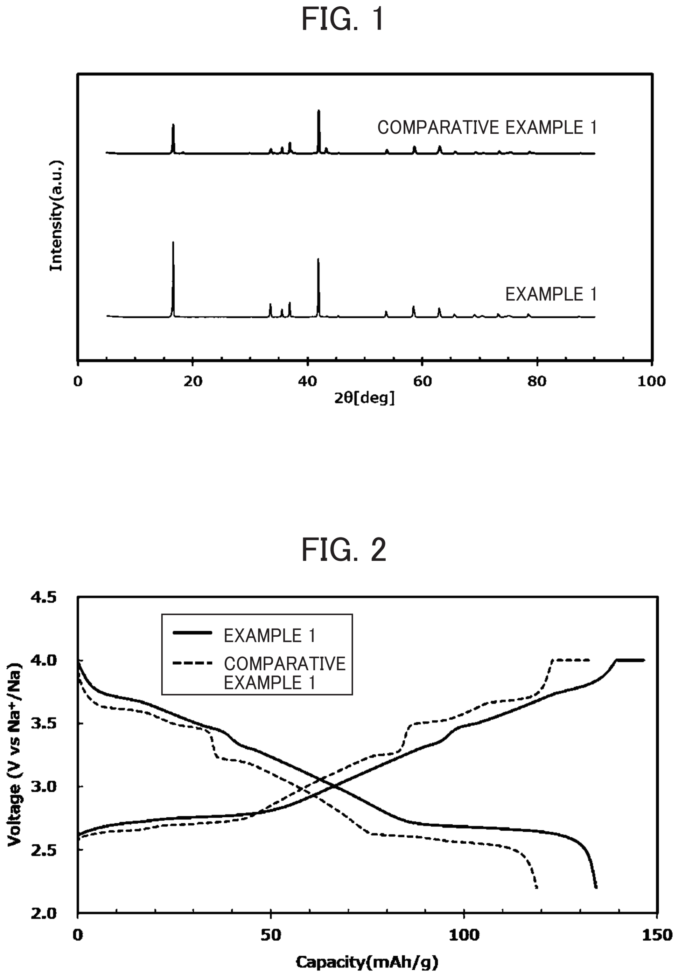

In the XRD measurement, SmartLab manufactured by Rigaku Corporation was used, with a $CuK_\alpha$ beam as an X-ray source (X-ray in which an intensity ratio of $CuK_{\alpha1}$ beam and $CuK_{\alpha2}$ beam is 2:1), tube voltage was 40 kV, and tube current was 30 mA. A Ni filter was also used to remove a $K_\beta$ beam. The diffraction chart obtained is shown in FIG. 1.

It was confirmed from the diffraction chart that the space group of the crystalline structure of the composite oxide contained in the positive electrode active material 1 belonged to R-3m (No. 166) and the lattice constant in the c-axis direction was 1.608 nm. The ratio of the peak intensity of 003 reflection to the peak intensity of 104 reflection was 1.28.

As the wavelength of the X-ray in calculating the lattice constant, the wavelength of $CuK_{\alpha1}$ beam and the wavelength of $CuK_{\alpha2}$ beam as well as the arithmetic mean value calculated from the intensity ratios thereof were used as the wavelength of $CuK_\alpha$ beam.

[Preparation of Battery]

To the positive electrode active material 1 (80 mass%), acetylene black (10 mass%) and polyvinylidene fluoride (10 mass%), N-methyl-2 pyrolidone was added, and the resultant was kneaded, whereby a mixture was obtained.

The obtained mixture was applied to an aluminum current collector (thickness of 20 μm), whereby a coating was formed. A laminate of the coating film and the aluminum current collector was pressurized by means of a roll press. The pressurized laminate was punched out into a disc shape of 14 mm. The punched disk was dried in a vacuum at 150°C for 15 hours to thereby form a positive electrode.

In addition, a sodium metal foil having a diameter of 16 mm was used as a negative electrode. As a separator, a fiberglass separator having a diameter of 20 mm was used. As an electrolyte, a non-aqueous electrolyte solution in which 1 mol of $NaPF_6$ was dissolved in 1 L of a mixed solution having a volume ratio of ethylene carbonate to dimethyl carbonate of 1:1 in the solvent was used.

Using the positive electrode, the negative electrode, the separator and the non-aqueous electrolytic solution as described above, a sodium ion secondary battery was produced in a glovebox with its interior replaced with argon.

The sodium ion secondary battery thus produced was provided with a positive electrode, a separator, and a negative electrode in this order, and a non-aqueous electrolyte was interposed between the positive electrode and the negative electrode.

[Charge-discharge test]

The resulting sodium ion secondary battery was charged and discharged at a constant value of the current value of 0.075 C within the voltage of 2.2 to 4.0 V to obtain a charge-discharge curve. FIG. 2 shows the charge-discharge curve obtained.

The discharge capacity of the sodium ion secondary battery obtained using the positive electrode active material 1 was 134 mAh/g, and the average operating voltage was 3.07 V.

<Example 2>

A precipitate was obtained by the same procedure as that of the positive electrode active material 1, followed by washing with water and drying.

In the same manner as in Example 1, 110 g of the dried precipitate, 24 g of titanium oxide and 82 g of the sodium carbonate were mixed.

Except for the above, the positive electrode active material 2 was obtained in the same manner as the positive electrode active material 1, and XRD measurement was performed, the battery was produced, and the charge-discharge test were carried out in the same manner as in Example 1 except that the positive electrode active material 2 was used instead of the positive electrode active material 1.

Of the obtained positive electrode active material 2 (composite oxide), a to d in the above-described Formula (1) resulted in: a:b:c:d = 1:0.40:0.40:0.20.

That is, the positive electrode active material 2 was a composite oxide having a composition represented by the formula $Na_1Ni_{0.4}Mn_{0.4}Ti_{0.2}O_e$ (e is a positive real number), where b/c = 1.00, d/(b + c + d) = 0.20 and b + c + d = 1.00 were established.

The average particle diameter of the secondary particles of the positive electrode active material 2 was 9.1 $\mu$m.

It was confirmed from the diffraction chart that the space group of the crystalline structure of the composite oxide contained in the positive electrode active material 2 belonged to R-3m (No. 166), and the lattice constant in the c-axis direction was 1.625 nm. The ratio of the peak intensity of 003 reflection to the peak intensity of 104 reflection was 1.03.

The discharge capacity of the sodium ion secondary battery obtained using the positive electrode active material 2 was 118 mAh/g, and the average operating voltage was 3.15 V.

<Example 3>

A precipitate was obtained by the same procedure as that of the positive electrode active material 1, followed by washing with water and drying.

In the same manner as in Example 1, 105 g of the dried precipitate, 39.4 g of titanium oxide and 89.5 g of the sodium carbonate were mixed.

Except for the above, the positive electrode active material 3 was obtained in the same manner as the positive electrode active material 1, XRD measurement was performed, the battery was produced, and the charge-discharge test were carried out in the same manner as in Example 1 except that the positive electrode active material 3 was used instead of the positive electrode active material 1.

Of the obtained positive electrode active material 3 (composite oxide), a to d in the above-described Formula (1) resulted in: a:b:c:d = 1:0.35:0.35:0.30.

That is, the positive electrode active material 3 was a composite oxide having a composition represented by the formula $Na_1Ni_{0.35}Mn_{0.35}Ti_{0.3}O_e$ (e is a positive real number), where b/c = 1.00, d/(b + c + d) = 0.30 and b + c + d = 1.00 were established.

The average particle diameter of the secondary particles of the positive electrode active material 3 was 9.3 $\mu$m.

It was confirmed from the diffraction chart that the space group of the crystalline structure of the composite oxide contained in the positive electrode active material 3 belonged to R-3m (No. 166) and the lattice constant in the c-axis direction was 1.630 nm. The ratio of the peak intensity of 003 reflection to the peak intensity of 104 reflection was 1.00.

The discharge capacity of the sodium ion secondary battery obtained using the positive electrode active material 3 was 116 mAh/g, and the average operating voltage was 3.21 V.

<Example 4>

Into a reaction vessel, 5L of pure water and an aqueous sodium hydroxide solution were added and mixed to obtain a reaction vessel liquid with pH being adjusted to 11.

A mixed aqueous solution of 2.4 mol/L of an aqueous nickel-sulfate solution and 3.0 mol/L of an aqueous manganese-sulfate solution was charged into the reaction vessel liquid at the rate of 200 mL/h. At the same time, 3.0 mol/L of an aqueous ammonium sulfate solution was charged at the rate of 100 mL/h.

During the charging of the aqueous solutions, the aqueous sodium hydroxide solution was charged into the reaction vessel liquid so that pH of the reaction vessel liquid was maintained at 11.

The temperature of the reaction vessel liquid was controlled to 40°C while the reaction vessel liquid was stirred at 600 rpm by a stirrer in air atmosphere.

A precipitate was produced by the above procedure.

The precipitate obtained by the above procedure was filtered out, and the filtered precipitate was washed with water and dried.

In the same manner as in Example 1, 105 g of the dried precipitate, 1.9 g of titanium oxide and 62.5 g of the sodium carbonate were mixed.

Except for the above, the positive electrode active material 4 was obtained in the same manner as the positive electrode active material 1, and XRD measurement was performed, the battery was produced, and the charge-discharge test were carried out in the same manner as in Example 1 except that the positive electrode active material 4 was used instead of the positive electrode active material 1.

Of the obtained positive electrode active material 4 (composite oxide), a to d in the above-described Formula (1) resulted in: a:b:c:d = 1:0.44:0.54:0.02.

That is, the positive electrode active material 4 was a composite oxide having a composition represented by the formula $Na_1Ni_{0.44}Mn_{0.54}Ti_{0.02}O_e$ (e is a positive real number), where b/c = 0.80, d/(b+c+d) = 0.02 and b+c+d = 1.00 were established.

The average particle diameter of the secondary particles of the positive electrode active material 4 was 9.0 $\mu$m.

It was confirmed from the diffraction chart that the space group of the crystalline structure of the composite oxide contained in the positive electrode active material 4 belonged to R-3m (No. 166) and the lattice constant in the c-axis direction was 1.611 nm. The ratio of the peak intensity of 003 reflection to the peak intensity of 104 reflection was 1.01.

The discharge capacity of the sodium ion secondary battery obtained using the positive electrode active material 4 was 115 mAh/g, and the average operating voltage was 3.11 V.

<Example 5>

Into a reaction vessel, 5L of pure water and an aqueous sodium hydroxide solution were added and mixed to obtain a reaction vessel liquid with pH being adjusted to 11.

A mixed aqueous solution of 3.0 mol/L of an aqueous nickel-sulfate solution and 2.5 mol/L of an aqueous manganese-sulfate solution was charged into the reaction vessel liquid at the rate of 200 mL/h. At the same time, 3.0 mol/L of an aqueous ammonium sulfate solution was charged at the rate of 100 mL/h.

During the charging of the aqueous solutions, the aqueous sodium hydroxide solution was charged into the reaction vessel liquid so that pH of the reaction vessel liquid was maintained at 11.

The temperature of the reaction vessel liquid was controlled to 40°C while the reaction vessel liquid was stirred at 600 rpm by a stirrer in air atmosphere.

A precipitate was produced by the above procedure.

The precipitate obtained by the above procedure was filtered out, and the filtered precipitate was washed with water and dried.

In the same manner as in Example 1, 105 g of the dried precipitate, 39.2 g of titanium oxide and 89.5 g of the sodium carbonate were mixed.

Except for the above, the positive electrode active material 5 was obtained in the same manner as the positive electrode active material 1, and XRD measurement was performed, the battery was produced, and the charge-discharge test were carried out in the same manner as in Example 1 except that the positive electrode active material 5 was used instead of the positive electrode active material 1.

Of the obtained positive electrode active material 5 (composite oxide), a to d in the above-described Formula (1) resulted in: a:b:c:d = 1:0.38:0.32:0.30.

That is, the positive electrode active material 5 was a composite oxide having a composition represented by the formula $Na_1Ni_{0.38}Mn_{0.32}Ti_{0.3}O_e$ (e is a positive real number), where b/c = 1.00, d/(b+c+d) = 0.30 and b+c+d = 1.00 were established.

The average particle diameter of the secondary particles of the positive electrode active material 5 was 9.2 $\mu$m.

It was confirmed from the diffraction chart that the space group of the crystalline structure of the composite oxide contained in the positive electrode active material 5 belonged to R-3m (No. 166) and the lattice constant in the c-axis direction was 1.628 nm. The ratio of the peak intensity of 003 reflection to the peak intensity of 104 reflection was 1.12.

The discharge capacity of the sodium ion secondary battery obtained using the positive electrode active material 5 was 120 mAh/g, and the average operating voltage was 3.13 V.

<Comparative Example 1>

A precipitate was obtained by the same procedure as that of the positive electrode active material 1, followed by washing with water and drying.

In the same manner as in Example 1, 126.5 g of the dried precipitate and 75.8 g of sodium carbonate were mixed.

Except for the above, the positive electrode active material 6 was obtained in the same manner as the positive electrode active material 1, and XRD measurement was performed, the battery was produced, and the charge-discharge test were carried out in the same manner as in Example 1 except that the positive electrode active material 3 was used instead of the positive electrode active material 1.

Of the obtained positive electrode active material 6 (composite oxide), a to d in the above-described Formula (1) resulted in: a:b:c:d = 1:0.5:0.5:0.

That is, the positive electrode active material 6 was a composite oxide having a composition represented by the formula $Na_1Ni_{0.5}Mn_{0.5}O_e$ (e is a positive real number), where b/c = 1.00, d/(b+c+d) = 0.00 and b+c+d = 1.00 were established.

The average particle diameter of the secondary particles of the positive electrode active material 6 was 9.2 $\mu$m.

The diffraction chart obtained is shown in FIG. 1.

It was confirmed from the diffraction chart that the space group of the crystalline structure of the composite oxide contained in the positive electrode active material 6 belonged to R-3m (No. 166) and the lattice constant in the c-axis direction was 1.602 nm. The ratio of the peak intensity of 003 reflection to the peak intensity of 104 reflection was 0.67.

In addition, FIG. 2 shows a charge-discharge curve obtained.

The discharge capacity of the sodium ion secondary battery obtained using the positive electrode active material 6 was 117 mAh/g, and the average operating voltage was 2.99 V.

<Comparative Example 2>

A precipitate was obtained by the same procedure as that of the positive electrode active material 1, followed by washing with water and drying.

In the same manner as in Example 1, 105 g of the dried precipitate, 43.5 g of titanium oxide and 92.0 g of the sodium carbonate were mixed.

Except for the above, the positive electrode active material 7 was obtained in the same manner as the positive electrode active material 1, and XRD measurement was performed, the battery was produced, and the charge-discharge test were carried out in the same manner as in Example 1 except that the positive electrode active material 7 was used instead of the positive electrode active material 1.

Of the obtained positive electrode active material 7 (composite oxide), a to d in the above-described Formula (1) resulted in: a:b:c:d = 1:0.34:0.34:0.32.

That is, the positive electrode active material 7 was a composite oxide having a composition represented by the formula $Na_1Ni_{0.34}Mn_{0.45}Ti_{0.34}O_e$ (e is a positive real number), where b/c = 1.00, d/(b+c+d) = 0.32 and b+c+d = 1.00 were established.

The average particle diameter of the secondary particles of the positive electrode active material 7 was 9.4 $\mu$m.

It was confirmed from the diffraction chart that the space group of the crystalline structure of the composite oxide contained in the positive electrode active material 7 belonged to R-3m (No. 166) and the lattice constant in the c-axis direction was 1.633 nm. The ratio of the peak intensity of 003 reflection to the peak intensity of 104 reflection was 0.72.

The discharge capacity of the sodium ion secondary battery obtained using the positive electrode active material 7 was 108 mAh/g, and the average operating voltage was 3.18 V.

<Comparative Example 3>

Into a reaction vessel, 5L of pure water and an aqueous sodium hydroxide solution were added and mixed to obtain a reaction vessel liquid with pH being adjusted to 11.

A mixed aqueous solution of 2.25 mol/L of an aqueous nickel-sulfate solution and 3.0 mol/L of an aqueous manganese-sulfate solution was charged into the reaction vessel liquid at the rate of 200 mL/h. At the same time, 3.0 mol/L of an aqueous ammonium sulfate solution was charged at the rate of 100 mL/h.

During the charging of the aqueous solutions, the aqueous sodium hydroxide solution was charged into the reaction vessel liquid so that pH of the reaction vessel liquid was maintained at 11.

The temperature of the reaction vessel liquid was controlled to 40°C while the reaction vessel liquid was stirred at 600 rpm by a stirrer in air atmosphere.

A precipitate was produced by the above procedure.

The precipitate obtained by the above procedure was filtered out, and the filtered precipitate was washed with water and dried.

In the same manner as in Example 1, 110 g of the dried precipitate, 2.0 g of titanium oxide and 66.0 g of the sodium carbonate were mixed.

Except for the above, the positive electrode active material 8 was obtained in the same manner as the positive electrode active material 1, and XRD measurement was performed, the battery was produced, and the charge-discharge test were carried out in the same manner as in Example 1 except that the positive electrode active material 8 was used instead of the positive electrode active material 1.

Of the obtained positive electrode active material 8 (composite oxide), a to d in the above-described Formula (1) resulted in: a:b:c:d = 1:0.42:0.56:0.02.

That is, the positive electrode active material 8 was a composite oxide having a composition represented by the formula $Na_1Ni_{0.42}Mn_{0.56}Ti_{0.02}O_e$ (e is a positive real number), where b/c = 0.75, d/(b+c+d) = 0.02 and b+c+d = 1.00 were established.

The average particle diameter of the secondary particles of the positive electrode active material 8 was 8.9 μm.

It was confirmed from the diffraction chart that the space group of the crystalline structure of the composite oxide contained in the positive electrode active material 8 belonged to R-3m (No. 166) and the lattice constant in the c-axis direction was 1.609 nm. The ratio of the peak intensity of 003 reflection to the peak intensity of 104 reflection was 0.61.

The discharge capacity of the sodium ion secondary battery obtained using the positive electrode active material 8 was 102 mAh/g, and the average operating voltage was 3.12 V.

<Comparative Example 4>

Into a reaction vessel, 5L of pure water and an aqueous sodium hydroxide solution were added and mixed to obtain a reaction vessel liquid with pH being adjusted to 11.

A mixed aqueous solution of 3.0 mol/L of an aqueous nickel-sulfate solution and 2.4 mol/L of an aqueous manganese-sulfate solution was charged into the reaction vessel liquid at the rate of 200 mL/h. At the same time, 3.0 mol/L of an aqueous ammonium sulfate solution was charged at the rate of 100 mL/h.

During the charging of the aqueous solutions, the aqueous sodium hydroxide solution was charged into the reaction vessel liquid so that pH of the reaction vessel liquid was maintained at 11.

The temperature of the reaction vessel liquid was controlled to 40°C while the reaction vessel liquid was stirred at 600 rpm by a stirrer in air atmosphere.

A precipitate was produced by the above procedure.

The precipitate obtained by the above procedure was filtered out, and the filtered precipitate was washed with water and dried.

In the same manner as in Example 1, 110 g of the dried precipitate, 40.2 g of titanium oxide and 91.3 g of the sodium carbonate were mixed.

Except for the above, the positive electrode active material 9 was obtained in the same manner as the positive electrode active material 1, and XRD measurement was performed, the battery was produced, and the charge-discharge test were carried out in the same manner as in Example 1 except that the positive electrode active material 9 was used instead of the positive electrode active material 1.

Of the obtained positive electrode active material 5 (composite oxide), a to d in the above-described Formula (1) resulted in: a:b:c:d = 1:0.39:0.31:0.3.

That is, the positive electrode active material 5 was a composite oxide having a composition represented by the formula $Na_1Ni_{0.39}Mn_{0.31}Ti_{0.3}O_e$ (e is a positive real number), wherein b/c = 1.25, d/(b+c+d) = 0.32 and b+c+d = 1.00 were established.

The average particle diameter of the secondary particles of the positive electrode active material 9 was 9.1 μm.

It was confirmed from the diffraction chart that the space group of the crystalline structure of the composite oxide contained in the positive electrode active material 5 belonged to R-3m (No. 166) and the lattice constant in the c-axis direction was 1.632 nm. The ratio of the peak intensity of 003 reflection to the peak intensity of 104 reflection was 0.90.

The discharge capacity of the sodium ion secondary battery obtained using the positive electrode active material 9 was 111 mAh/g, and the average operating voltage was 3.02 V.

<Comparative Example 5>

In the same manner as in Example 1, 62 g of the nickel hydroxide, 51 g of manganese tetraoxide, 80 g of the sodium carbonate, and 12 g of titanium oxide were mixed.

Except for the above, the positive electrode active material 10 was obtained in the same manner as the positive electrode active material 1, and XRD measurement was performed, the battery was produced, and the charge-discharge test were carried out in the same manner as in Example 1 except that the positive electrode active material 10 was used instead of the positive electrode active material 1.

Of the obtained positive electrode active material 10 (composite oxide), a to d in the above-described Formula (1) resulted in: a:b:c:d = 1:0.45:0.45:0.10.

That is, the positive electrode active material 10 was a composite oxide having a composition represented by the formula $Na_1Ni_{0.45}Mn_{0.45}Ti_{0.10}O_e$ (e is a positive real number), where b/c = 1.00, d/(b + c + d) = 0.10 and b + c + d = 1.00 were established.

The average particle diameter of the secondary particles of the positive electrode active material 3 was 8.8 μm.

It was confirmed from the diffraction chart that the space group of the crystalline structure of the composite oxide contained in the positive electrode active material 10 belonged to R-3m (No. 166) and the lattice constant in the c-axis direction was 1.604 nm. The ratio of the peak intensity of 003 reflection to the peak intensity of 104 reflection was 0.58.

The discharge capacity of the sodium ion secondary battery obtained using the positive electrode active material 10 was 95 mAh/g, and the average operating voltage was 3.04 V.

<Results>

Table 1 summarizes the compositions of the positive electrode active materials prepared in Examples 1 to 5 and Comparative Examples 1 to 5 above, the secondary particle diameters (mean particle diameters of the secondary particles), the lattice constants in the c-axis direction, and XRD peak strength ratios.

In addition, Table 1 shows the discharge capacities and the average operating voltages of the sodium ion secondary batteries prepared using the positive electrode active materials prepared in Examples 1 to 5 and Comparative Examples 1 to 5 above.

| Table 1 | Composition | | Secondary particle size [μm] | Lattice constant in c-axis direction [nm] | XRD peak strength ratio I(003)/I(104) | Discharging capacity [mAh/g] | Average operating voltage [V] |
|---|---|---|---|---|---|---|---|
| | b/c | d/(b+c+d) | | | | | |
| Example 1 | 1.00 | 0.10 | 9.3 | 1.608 | 1.28 | 134 | 3.07 |
| Example 2 | 1.00 | 0.20 | 9.1 | 1.625 | 1.03 | 118 | 3.15 |
| Example 2 | 1.00 | 0.30 | 9.3 | 1.630 | 1.00 | 116 | 3.21 |
| Example 4 | 0.80 | 0.02 | 9.0 | 1.611 | 1.01 | 115 | 3.11 |
| Example 5 | 1.20 | 0.30 | 9.2 | 1.628 | 1.12 | 120 | 3.13 |
| Comparative Example 1 | 1.00 | 0.00 | 9.2 | 1.602 | 0.67 | 117 | 2.99 |
| Comparative Example 2 | 1.00 | 0.32 | 9.4 | 1.633 | 0.72 | 108 | 3.18 |
| Comparative Example 3 | 0.75 | 0.02 | 8.9 | 1.609 | 0.61 | 102 | 3.12 |
| Comparative Example 4 | 1.25 | 0.30 | 9.1 | 1.632 | 0.90 | 111 | 3.02 |
| Comparative Example 5 | 1.00 | 0.10 | 8.8 | 1.604 | 0.58 | 95 | 3.04 |

From the above results, it was confirmed that the space group of the composite oxide belonged to R-3m (No. 166), the lattice constant in the c-axis direction was 1.605 to 1.630 nm, and in the diffraction chart obtained by performing X-ray diffraction measurement, when the ratio of the peak intensity of 003 reflection to the peak intensity of 104 reflection was not less than 1.00, the sodium ion secondary battery obtained by using the positive electrode active material for a sodium ion secondary battery containing the foregoing composite oxide exhibited large discharge capacity and high average operating voltage.

**Claims**

1. A positive electrode active material for a sodium ion secondary battery, the material comprising a composite oxide represented by Formula (1)

   wherein a crystalline structure of the composite oxide belongs to a space group R-3m, and
   in a diffraction chart obtained by performing X-ray diffraction measurement, a ratio of a peak strength of 003 reflection of the composite oxide to a peak strength of 104 reflection of the composite oxide is not less than 1.00,

   Formula (1) $\quad Na_aNi_bMn_cTi_dO_e,$

in Formula (1), a to e are positive real numbers, and b, c, and d satisfy the following relationships;

$$0.80 \le b/c \le 1.20;$$

$$0 < d/(b + c + d) \le 0.30;$$

and

$$b + c + d = 1.00.$$

2. The positive electrode active material for a sodium ion secondary battery according to claim 1, wherein a lattice constant in a c-axis direction is 1.605 to 1.630 nm.

3. The positive electrode active material for a sodium ion secondary battery according to claim 1, wherein an average particle size of secondary particles is 2 to 20 $\mu$m.

4. A method of producing the positive electrode active material for a sodium ion secondary battery according to any one of claims 1 to 3, the method comprising:

   introducing a nickel source and a manganese source into a reaction vessel liquid maintaining pH of not lower than 9 and not higher than 12 to produce a precipitate,
   mixing the precipitate, a sodium source and a titanium source to obtain a mixture, and
   heating the mixture at not lower than 400°C and not higher than 1200°C.

5. A sodium ion secondary battery comprising:

   a positive electrode including the positive electrode active material for a sodium ion secondary battery according to any one of claims 1 to 3;
   a negative electrode; and
   a non-aqueous electrolyte that is interposed between the positive electrode and the negative electrode and conducts sodium ions.

6. A sodium ion secondary battery comprising:

   a positive electrode including the positive electrode active material for a sodium ion secondary battery according to any one of claims 1 to 3;
   a negative electrode; and
   a solid electrolyte that is interposed between the positive electrode and the negative electrode and that conducts sodium ions.

# FIG. 1

# FIG. 2

## INTERNATIONAL SEARCH REPORT

| International application No. |
| --- |
| **PCT/JP2024/022189** |

| | |
| --- | --- |
| **A.** | **CLASSIFICATION OF SUBJECT MATTER** |

*H01M 4/525*(2010.01)i; *H01M 4/505*(2010.01)i; *H01M 10/054*(2010.01)i; *H01M 10/0562*(2010.01)i
FI:  H01M4/525; H01M4/505; H01M10/054; H01M10/0562

According to International Patent Classification (IPC) or to both national classification and IPC

| | |
| --- | --- |
| **B.** | **FIELDS SEARCHED** |

Minimum documentation searched (classification system followed by classification symbols)

H01M4/525; H01M4/505; H01M10/054; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | QI, Xingguno et al. Sodium-Deficient O3-Na0.9[Ni0.4MnxTi0.6-x]O2 Layered-Oxide Cathode Materials for Sodium-Ion Batteries. Particle & Particle Systems Characterization. 2016, volume 33, issue 8, pp. 538-544<br>abstract, 2. Results and Discussion, tables 1-2, fig. 1-2 | 1-3, 5 |
| Y | abstract, 2. Results and Discussion, tables 1-2, fig. 1-2 | 4, 6 |
| Y | CN 115275180 A (SHANGHAI ENERGY NEW MATERIALS TECHNOLOGY CO., LTD.) 01 November 2022 (2022-11-01)<br>paragraphs [0032]-[0033], [0042], [0052] | 4 |
| Y | JP 2022-66867 A (TOYOTA JIDOSHA KABUSHIKI KAISHA) 02 May 2022 (2022-05-02)<br>paragraph [0022] | 6 |
| A | CN 116259743 A (YANGTZE RIVER DELTA PHYSICS RESEARCH CENTER CO., LTD.) 13 June 2023 (2023-06-13)<br>paragraph [0049], example 1, fig. 2 | 1-6 |

| ✓ Further documents are listed in the continuation of Box C. | ✓ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **03 September 2024** | **17 September 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

International application No.

**PCT/JP2024/022189**

| C. | DOCUMENTS CONSIDERED TO BE RELEVANT | |
|---|---|---|
| Category* | Citation of document, with indication, where appropriate, of the relevant passages | Relevant to claim No. |
| A | JP 2013-175311 A (NATIONAL INSTITUTE OF ADVANCED INDUSTRIAL SCIENCE AND TECHNOLOGY) 05 September 2013 (2013-09-05) claim 1, paragraph [0100] | 1-6 |

Form PCT/ISA/210 (second sheet) (July 2022)

**INTERNATIONAL SEARCH REPORT**
Information on patent family members

International application No.

**PCT/JP2024/022189**

| Patent document cited in search report | | | Publication date (day/month/year) | Patent family member(s) | | | Publication date (day/month/year) |
|---|---|---|---|---|---|---|---|
| CN | 115275180 | A | 01 November 2022 | WO | 2024/040925 | A1 | |
| JP | 2022-66867 | A | 02 May 2022 | (Family: none) | | | |
| CN | 116259743 | A | 13 June 2023 | (Family: none) | | | |
| JP | 2013-175311 | A | 05 September 2013 | (Family: none) | | | |

Form PCT/ISA/210 (patent family annex) (July 2022)

**EP 4 712 168 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010080424 A